# EUROPÄISCHE PATENTANMELDUNG

(11) **EP 1 076 200 A1**
(43) Veröffentlichungstag der Anmeldung: **14.02.2001**
(21) Anmeldenummer: 00115543.1
(22) Anmeldetag: 19.07.2000
(51) Int. Cl.: F16L 47/06

(54) **Kupplungsmuffe für die Verbindung von zwei Kunststoffrohren**

(30) Priorität: 12.08.1999 DE 29914160 U
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(57) **Zusammenfassung**

Es handelt sich um eine Kupplungsmuffe für Kunststoffrohre mit in den Endbereichen jeweils einer Klemmringaufnahme für einen Klemmring, wobei der Klemmring außenumfangsseitig einen Klemmkonus und die Klemmringaufnahme einen Klemmgegenkonus aufweist. Beide Klemmringaufnahmen sind als stirnrandseitig geschlossene Auskammerungen ausgebildet. Der jeweilige Klemmgegenkonus ist im Bereich beider Auskammerungen innenseitig in die Kupplungsmuffe eingeformt. Dadurch ist die Kupplungsmuffe in montagetechnischer und fertigungstechnischer Hinsicht besonders einfach.

## Beschreibung

Die Erfindung betrifft eine Kupplungsmuffe für die Verbindung von zwei Kunststoffrohren, welche Kunststoffrohre mit Einsteckenden in die gegenüberliegenden offenen Stirnseiten der Kupplungsmuffe einführbar sind, wobei in den Endbereichen der Kupplungsmuffe innenseitig jeweils eine Klemmringaufnahme für einen Klemmring angeordnet ist, wobei der Klemmring außenumfangsseitig einen Klemmkonus und innenumfangsseitig eine oder mehrere Klemmrippen und die Klemmringaufnahme einen Klemmgegenkonus aufweist, und wobei die eingeführten Einsteckenden gegen Zurückziehen durch eine rückzugsreibungsbedingte Wechselwirkung zwischen Klemmkonus und Klemmgegenkonus festgeklemmt werden. - Bei dem Klemmring handelt es sich üblicherweise um einen Stahlklemmring, der mit einem parallel oder schräg zur Längsachse der Kupplungsmuffe verlaufenden Funktionsschlitz versehen ist. Die Kupplungsmuffen dienen insbesondere der Verbindung von erdverlegten Kabelführungsrohren.

Bei einer bekannten Kupplungsmuffe der eingangs beschriebenen Ausführungsform ist zumindest eine der Klemmringaufnahmen als stirnrandseitig offene Klemmringaufnahme ausgebildet, in welche ein Klemmgegenkonusring mit dem Klemmgegenkonus eingesetzt ist. Sowohl der in die stirnrandseitig offene Klemmringaufnahme eingesetzte Stahlklemmring als auch der Klemmgegenkonusring werden mit Hilfe einer auf das entsprechende Endteil der Kupplungsmuffe aufgeschraubten ringförmigen Überwurfmutter in der Klemmringaufnahme festgehalten. Ferner sind Dichtungen vorgesehen, die als Lippendichtungen ausgebildet sind und aus einem trapezförmigen Tragring und einer angeformten, in Einschubrichtung vom Tragring vorkragenden Dichtungslippe bestehen. Die bekannte Kupplungsmuffe hat sich bewährt, ist jedoch insbesondere in fertigungstechnischer und montagetechnischer Hinsicht verbesserungsbedürftig.

Der Erfindung liegt die Aufgabe zugrunde, eine Kupplungsmuffe der eingangs beschriebenen Gattung zu schaffen, die einfach aufgebaut ist und sich durch ihre montagetechnische und fertigungstechnische Einfachheit auszeichnet.

Zur Lösung dieser Aufgabe lehrt die Erfindung, dass beide Klemmringaufnahmen in den Endbereichen der Kupplungsmuffe als stirnrandseitig geschlossene Auskammerungen ausgebildet sind, und dass der jeweilige Klemmgegenkonus im Bereich der Auskammerungen innenseitig in die Kupplungsmuffe eingeformt ist. - Dabei geht die Erfindung von der Erkenntnis aus, dass die Fertigung und Montage der Kupplungsmuffe besonders einfach erfolgen kann, wenn beidseitig auf einen separaten Klemmgegenkonusring verzichtet wird. Lediglich die beiden Stahlklemmringe müssen in die Auskammerungen eingesetzt werden, wobei der Klemmgegenkonus bereits im Zuge der Fertigung der Kupplungsmuffe im Bereich der Auskammerung eingeformt wird. Außerdem kann beidseitig auf eine Überwurfmutter verzichtet werden, weil die Klemmringaufnahmen als stirnrandseitig geschlossene Auskammerungen ausgebildet sind. Im Ergebnis lassen sich die beiden Kunststoffrohre in die beiden offenen Stirnseiten der Kupplungsmuffe einschieben, ohne dass eine Fixierung mittels Überwurfmuttern erfolgt. Überraschenderweise ermöglicht die erfindungsgemäße Kupplungsmuffe trotz ihres einfachen Aufbaus und der einfachen Montage eine sichere Verbindung zweier Kunststoffrohre.

Nach einem weiteren Vorschlag der Erfindung ist bei einer Kupplungsmuffe mit beidseitig jeweils zumindest einer Dichtung vorgesehen, dass die Dichtungen als O-Ringe ausgebildet sind. Folglich sind Lippendichtungen nicht länger erforderlich, weil einfache O-Ringe verwendet werden, so dass sich auch die Dichtungsaufnahmen durch ihre einfache Form auszeichnen.

Nach bevorzugter Ausführungsform sind die beiden Dichtungsaufnahmen in Einschubrichtung hinter den Klemmringaufnahmen angeordnet. Die Kupplungsmuffe kann Stirnseiten mit gleichem Innendurchmesser aufweisen, so dass in die beiden Stirnseiten Kunststoffrohre mit Einsteckenden mit gleichem Außendurchmesser einführbar sind. Es besteht aber auch die Möglichkeit, dass die Stirnseiten einen unterschiedlichen Innendurchmesser aufweisen, so dass in die beiden Stirnseiten Kunststoffrohre mit Einsteckenden mit unterschiedlichem Außendurchmesser einführbar sind. In dieser Ausführungsform bildet die erfindungsgemäße Kupplungsmuffe eine sogenannte Reduzierungsmuffe.

Im folgenden wird die Erfindung anhand einer lediglich ein Ausführungsbeispiel darstellenden Zeichnung näher erläutert. Es zeigen in schematischer Darstellung
- Fig. 1: einen Längsschnitt durch die erfindungsgemäße Kupplungsmuffe, und
- Fig. 2: den Gegenstand nach Fig. 1 in einer anderen Ausführungsform.

In den Figuren ist eine Kupplungsmuffe 1 für die Verbindung von zwei Kunststoffrohren 2 dargestellt, welche mit ihren Einsteckenden in die gegenüberliegenden offenen Stirnseiten 3 der Kupplungsmuffe 1 einführbar sind. In den Endbereichen der Kupplungsmuffe 1 ist innenseitig jeweils eine Klemmringaufnahme 4 für einen Klemmring 5 angeordnet. Dabei weist der Klemmring 5 außenumfangsseitig einen Klemmkonus 6 und innenumfangsseitig eine oder mehrere Klemmrippen 7 auf. Die Klemmringaufnahme 4 weist einen Klemmgegenkonus 8 auf. Die eingeführten Einsteckenden werden durch eine rückzugsreibungsbedingte Wechselwirkung zwischen Klemmkonus 6 und Klemmgegenkonus 8 festgeklemmt. Die Kunststoffrohre 2 selbst bzw. deren Einsteckenden sind in den Figuren lediglich angedeutet.

Beide Klemmringaufnahmen 4 sind als stirnrandseitig geschlossene Auskammerungen 4 ausgebildet. Der jeweilige Klemmgegenkonus 8 ist im Bereich beider Auskammerungen 4 innenseitig in die Kupplungsmuffe 1 eingeformt. Außerdem sind beidseitig Dichtungsaufnahmen 9 für Dichtungen 10 vorgesehen, wobei beide Dichtungen 10 als O-Ringe ausgebildet sind. Die beiden Dichtungsaufnahmen 9 für die O-Ringe 10 sind in Einschubrichtung (Pfeil A) hinter den Klemmringaufnahmen 4 angeordnet.

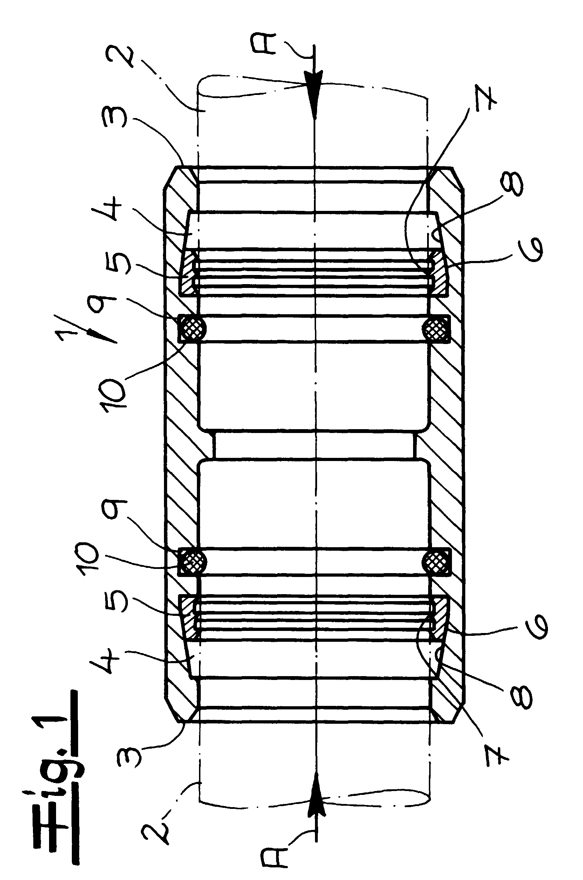

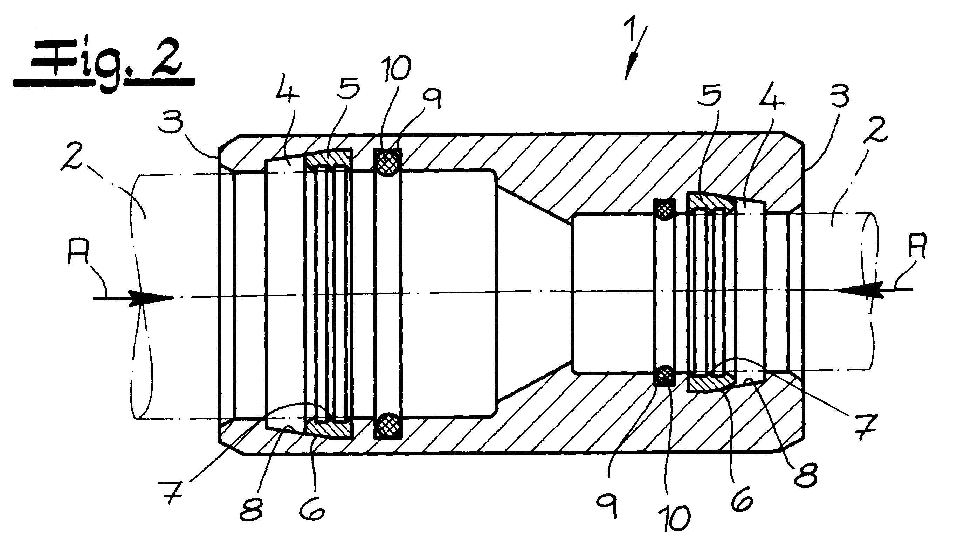

Während bei der Kupplungsmuffe 1 nach Fig. 1 die beiden Stirnseiten 3 den gleichen Innendurchmesser aufweisen, weisen die beiden Stirnseiten 3 in der Ausführungsform gemäß Fig. 2 einen unterschiedlichen Innendurchmesser auf. Folglich lassen sich in die beiden Stirnseiten 3 Kunststoffrohre 2 mit Einsteckenden mit unterschiedlichem Außendurchmesser einführen, so dass diese Ausführungsform eine Reduzierungsmuffe bildet.

## Patentansprüche

1. Kupplungsmuffe (1) für die Verbindung von zwei Kunststoffrohren (2), welche mit Einsteckenden in die gegenüberliegenden offenen Stirnseiten (3) der Kupplungsmuffe (1) einführbar sind,
wobei in den Endbereichen der Kupplungsmuffe (1) innenseitig jeweils eine Klemmringaufnahme (4) für einen Klemmring (5) angeordnet ist,
wobei der Klemmring (5) außenumfangsseitig einen Klemmkonus (6) und innenumfangsseitig ein oder mehrere Klemmrippen (7) und die Klemmringaufnahme (4) einen Klemmgegenkonus (8) aufweist,
und wobei die eingeführten Einsteckenden gegen Zurückziehen durch eine rückzugsreibungsbedingte Wechselwirkung zwischen Klemmkonus (6) und Klemmgegenkonus (8) festgeklemmt werden,
**dadurch gekennzeichnet**,
dass beide Klemmringaufnahmen (4) als stirnrandseitig geschlossene Auskammerungen (4) ausgebildet sind, und dass der jeweilige Klemmgegenkonus (8) im Bereich beider Auskammerungen (4) innenseitig in die Kupplungsmuffe (1) eingeformt ist.

2. Kupplungsmuffe (1) nach Anspruch 1 mit jeweils zumindest einer Dichtungsaufnahme (9) für eine Dichtung (10), dadurch gekennzeichnet, dass die Dichtungen (10) als O-Ringe ausgebildet sind.

3. Kupplungsmuffe (1) nach Anspruch 1 oder 2, dadurch gekennzeichnet, dass beiden Dichtungsaufnahmen (9) für die O-Ringe (10) in Einschubrichtung hinter den Klemmringaufnahmen (4) angeordnet sind.

4. Kupplungsmuffe (1) nach einem der Ansprüche 1 bis 3, dadurch gekennzeichnet, dass die beiden Stirnseiten (3) den gleichen Innendurchmesser aufweisen.

5. Kupplungsmuffe (1) nach einem der Ansprüche 1 bis 3, dadurch gekennzeichnet, dass die beiden Stirnseiten (3) einen unterschiedlichen Innendurchmesser aufweisen.
